Europäisches Patentamt

European Patent Office

Office européen des brevets

(11) Veröffentlichungsnummer: **0 016 920**
**B1**

(12) **EUROPÄISCHE PATENTSCHRIFT**

(45) Veröffentlichungstag der Patentschrift:
**22.12.82**

(21) Anmeldenummer: **80100465.6**

(22) Anmeldetag: **30.01.80**

(51) Int. Cl.³: **H 04 M 1/60**

(54) Schaltungsanordnung für mit einem Verstärker-Netzwerk ausgerüstete Fernmeldeapparaturen.

(30) Priorität: **03.02.79 DE 2904096**

(43) Veröffentlichungstag der Anmeldung:
**15.10.80 Patentblatt 80/21**

(45) Bekanntmachung des Hinweises auf die Patenterteilung:
**22.12.82 Patentblatt 82/51**

(84) Benannte Vertragsstaaten:
**AT BE CH FR GB IT LU NL SE**

(56) Entgegenhaltungen:
**DE-A-2 203 214**
**DE-A-2 364 369**

(73) Patentinhaber: **Telefonbau und Normalzeit GmbH,**
**Mainzer Landstrasse 128-146 Postfach 4432,**
**D-6000 Frankfurt (Main) (DE)**
Patentinhaber: **Licentia Patent-Verwaltungs-GmbH,**
**Theodor-Stern-Kai 1, D-6000 Frankfurt/Main 70 (DE)**

(72) Erfinder: **Minner, Willy, Ing. grad., Im Eselsberg 120,**
**D-7103 Schwaigern (DE)**
Erfinder: **Rodenheber, Rainer, Dipl.-Phys.,**
**Theodor-Heuss-Strasse 10, D-7105 Leingarten (DE)**
Erfinder: **Reitz, Erhard, Dipl.-Ing., Urselbachstrasse 3,**
**D-6370 Oberursel 5 (DE)**

## Schaltungsanordnung für mit einem Verstärker-Netzwerk ausgerüstete Fernmeldeapparaturen

In Fernmeldeapparaturen, bei denen zur Durchführung oder Unterstützung bestimmter Funktionen, wie z.B. Schallumsetzung oder Informationsausgabe durch Oszillation zeitweise Verstärker eingesetzt werden, kann der bei bestehender Verbindung vorgenommene Umschaltvorgang auf das Verstärker-Netzwerk in bestimmten Fällen eine vorübergehend kritische Änderung der Grösse des in der Fernmeldeleitung herrschenden und durch Erkennungsmittel kontrollierten, z. B. als Belegungskennung gewerteten Stromflusses herbeiführen. Ein solcher Fall liegt vor, wenn dieser Stromfluss gleichzeitig zur Verstärker-Einspeisung herangezogen wird und unmittelbar nach der Umschaltung ein den Eingangskreis des Verstärker-Netzwerkes abriegelnder Kondensator über einen möglichst hochohmig zu haltenden, zur Arbeitspunkteinstellung notwendingen Netzwerkteil gegen das Bezugspotential der steuernden Strecke des Verstärkers aufgeladen werden muss und hierbei das für die Anschlussleitung entlastende Verhalten des Eingangstransistors aus betrieblichen Gründen nicht von den nachfolgenden Verstärkerstufen abgefangen werden kann.

Eine derartige Anordnung wirkt als Netzwerk gegenüber der Leitung im Augenblick des Umschaltens nahezu wie ein offenes Gebilde, zumindest jedoch wie eine relativ hochohmige Last, die erst nach Aufladung des Abriegelungskondensators und der gegebenenfalls anderen noch vorhandenen kapazitiven Speicher allmählich in den Bereich der normalen Betriebsbelastung übergeht. Während dieser Zeit kann also, wie eingangs erwähnt, den Erkennungsmitteln für den Anschlusszustand fälschlicherweise das Belegungsende oder eine andere nicht gewollte Schaltinformation signalisiert werden.

Dieses liesse sich für z.B. mit einem Mikrofonverstärker ausgerüstete Fernsprechapparate vermeiden, wenn die einzelnen Stufen des Verstärkers oder zumindest die die Hauptbelastung an die Leitung abgebende Stufe von einem niederohmigen Belastungswert aus zu dem die Betriebsbelastung darstellenden Wert hinlaufen würde. Mit einem solchen Vorgehen würde man sich aber im Hinblick auf den Anwendungszweck ein ungünstiges Verhalten des Verstärkergebildes erkaufen, so dass eine Lösung des Problems auf diesem Wege verworfen werden muss.

Aufgabe der Erfindung ist es daher, nach einer Möglichkeit zu suchen, die das Betriebsverhalten eines solchen Verstärkers nicht ungünstig beeinflusst.

Die Lösung hierfür ist im Patentanspruch 1 verankert. Hiernach lässt sich für den Fernmeldeanschluss bei der Durchführung eines von anderen Funktionsmitteln auf das Verstärker-Netzwerk übergehenden Schaltwechsels ein fälschlicher Rückzug der Belegungskennung oder auch die Vornahme einer anderen Signalisierung dann sicher vermeiden, wenn der zum ungünstigen Schaltverhalten führende Netzwerk-Zweig zu Beginn der Schalthandlung durch einen vorübergehend aktiviert gehaltenen Strompfad überbrückt wird.

Wie die die Erfindung weiter ausbildenden Unteransprüche zeigen, besteht eine Freiheit in der Wahl der Funktion, die durch die Überbrückung erzielt werden soll. So lässt sich über diesen zusätzlichen Strompfad entweder eine so schnelle Aufladung des Abriegelungskondensators erzielen, dass damit die Absenkungszeit des Stromes auf ein unkritisches Mass verkürzt wird oder ein besonderer Haltezweig bilden, der während der ungekürzten Aufladezeit des Kondensators sicher die Belegungshaltung übernimmt. Selbstverständlich ist auch eine Kombination beider Massnahmen möglich.

Der Ort der Einfügung des einzelnen vorübergehend wirksam zu schaltenden Strompfades ist von der Art der zu erzielenden Funktion abhängig. Seine Aussteuerung könnte im Prinzip durch ein in kurzer Zeit in seine Ruhelage zurückfallendes Zeitglied oder, wie als besonders zweckmässig angesehen, durch das Abfühlen des Leitungspotentials oder besser noch, durch das Abfühlen des Arbeitspunktpotentials entweder am Verstärkereingang oder auch am Verstärkerausgang erfolgen.

Mit der Beschreibung eines zwei mögliche Anschaltungen des zusätzlichen Strompfades und drei mögliche Ansteuerungen dieses Strompfades zeigenden Beispieles möge der Erfindungsgedanke verdeutlicht werden.

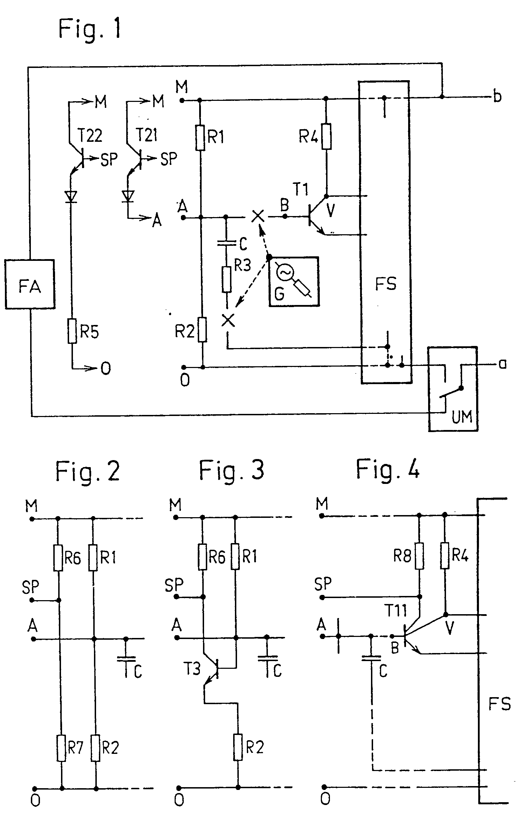

Die dazugehörigen Zeichnungen Fig. 1 bis Fig. 4 sind in entsprechender Zusammenfügung zu verstehen. Aus Fig. 1 ist die Anwendung der Schaltungsanordnung und der alternativ mögliche Wirkungseinfluss des zusätzlichen Strompfades herauslesbar. Die Fig. 2 bis 4 geben zur wahlweisen Ergänzung der Fig. 1 dienende Steuerquellen-Netzwerke für die Aktivierung dieses Strompfades wieder.

Für das Beispiel wird davon ausgegangen, dass Fig. 1 eine beliebigen Zwecken dienende Fernmeldeapparatur sein soll, bei der lediglich festgelegt sei, dass sie über eine Verbindungsleitung a/b an eine mit Stromflusserkennungsmitteln ausgerüstete Zentraleinrichtung angeschlossen sei, und ausser den dem Verwendungszweck angepassten Funktionsmitteln FA auch eine Verstärkereinrichtung T1 mit FS aufweise, auf die durch eine Umschalteinrichtung UM bei funktioneller Notwendigkeit umzuschalten ist.

Ein spezieller Fall wäre ein mit Anschaltmitteln und eine Wähleinrichtung ausgestatteter Fernsprechapparat, dessen Sprechkreis G über eine aus der Leitung a/b gespeiste Verstärker- und Einkopplungseinrichtung T1/FS betrieben wird.

Bei einem abgehend gerichteten Verbindungsaufbau muss vom Hör- und Sprechkreis des Fernsprechapparates auf eine die Verbindungsinformation abgebende Wähleinrichtung umgeschaltet werden und dieses in der Regel in hin- und hergehendem Wechsel so oft, wie Wählziffern zu bilden sind. Die volle Betriebsbereitschaft der Verstärkereinrichtung ist jedoch nur vorhanden, wenn der den Sprechkreis galvanisch abriegelnde Kondensator C keinen das Arbeitspotential A/O der Verstärkereinrichtung T1/FS verschiebenden Ausgleichstrom führt.

In der zeichnerischen Darstellung sind für die Lage des Senders bzw. Mikrofons G zwei mit X bezeichnete Möglichkeiten angedeutet. Je nach Ausbildung der Sendequelle und des mit FS bezeichneten Einkopplungsteiles für den Sendestrom kann die Einfügung des herausgesetzt gezeichneten Sendegebildes G entweder in einen einen Gleichstromfluss aufweisenden oder einen einen solchen Strom nicht enthaltenden Zweig der Sendekreis-Netzwerkmasche erfolgen. Der einen Gleichstrom aufweisende Zweig wäre die Verbindung A/B, der gleichstromfreie Zweig wäre die über den Kondensator C und den Widerstand R3 zum Einkopplungsteil FS führende Verbindungsweg. Das Potential des Basis-Einspeisepunktes A wird durch die Bemessung der Spannungsteiler-Widerstände R1 und R2 bestimmt. Diese zum Kleinhalten einer Sendestromableitung möglichst hochohmig zu wählenden Widerstandswerte R1/R2 verhindern jedoch ein schnelles Bereitstellen des Arbeitspotentials für das Verstärker-Netzwerk dann, wenn nach der Umschaltung UM auf das Netzwerk ein völlig leerer oder tiefentladener Kondensator C vorgefunden wird.

Da jeder Einpegelvorgang für die Arbeitspunkteinstellung des Verstärker-Netzwerkes eine Änderung des über den Kollektorwiderstand R4 gehenden Stromflusses zur Folge hat, ändert sich auch vorübergehend der Belastungswert für die Leitung a/b. Läuft nun diese Änderung in einen von den Stromflusserkennungsmitteln über Zeitdauer und Pegelhöhe als Zustandsänderung zu wertenden Bereich, dann wird in der Zentraleinrichtung zwangsläufig ein in diesem Fall nicht gewünschter Schaltvorgang ausgelöst. In dem für einen Fernsprechanschluss gegebenen Beispiel kann die als Stromabsenkung auftretende Änderung gleichbedeutend mit der das Belegungsende kennzeichnenden Signalisierung sein.

Dieser vorübergehende mögliche Signalzustand lässt sich auf zweierlei Art vermeiden und zwar dergestalt, dass entweder durch eine Verkürzung der Einpegelzeit die zum Auswerten der Absenkung kritische Zeitspanne mit Sicherheit unterschritten wird oder, dass während der unverkürzt gehaltenen Einpegelzeit der auf der Leitungsseite erscheinende Belastungswert des Verstärker-Netzwerkes in einem die Stromflusserkennungsmittel nicht beeinflussenden Wertbereich gehalten wird.

Die eine Möglichkeit wird durch die Einwirkung des mit T21 bezeichneten Ladestrompfades für den Kondensator C, die andere durch die Einwirkung des mit T22 und R5 bezeichneten Laststrompfades geboten. Beide hier alternativ zu sehende Einzeichnungen führen in dem einen Fall auf die Pfad-Anschlusspunkte M und A und in dem anderen Fall auf die Pfad-Anschlusspunkte M und O.

Die in beiden Fällen gleiche Lage des Steuereinganges SP ist mit einer zweckmässig gestalteten Steuerquelle, so wie sie in unterschiedlicher Ausbildung als Anteil der Fig. 1 in den Fig. 2 bis 4 dargestellt ist, verbunden.

Den geringsten Aufwand erfordert die Anordnung nach Fig. 2. Hier dient als Steuerquelle ein einfacher, aus den Widerständen R6 und R7 gebildeter Spannungsteiler, dessen Einfügung in das Verstärker-Netzwerk zwischen die Potentialpunkte M und O vorzunehmen ist. Das Teilerpotential SP ist so gewählt, dass es den zur Anwendung kommenden Strompfad T21 oder T22/R5 während der kritischen Zeit sicher aussteuert und diese Aussteuerung spätestens nach Einpegelung des Arbeitspunktes des Verstärker-Netzwerkes wieder beendet.

In Verbindung mit der Strompfadanordnung T21 dient als Fühlpunkt für den Grad der Aktivierung die am Verstärkereingang A/B herrschende Potentiallage, in Verbindung mit der Strompfadanordnung T22/R5 wird die zwischen den äusseren Netzwerkpunkten M und O herrschende Potentialdifferenz abgefühlt und der aus der Steuerstrecke der Strompfadanordnung gebildeten Schwelle gegenübergestellt. Diese Schwelle kann durch eine Einfügung von einen Konstant-Spannungsabfall abgebenden Funktionselementen, wie z.B. Dioden, bedarfsgerecht angehoben werden.

Der Überbrückungspfad T21 dient, wie bereits vorher angedeutet, durch die Bereitstellung eines zusätzlichen Ladepfades für den Kondensator C, zur Verkürzung der Belastungsänderungszeit, der Überbrückungspfad T22/R5 zum unmittelbaren Verbindern einer die Erkennungsschaltmittel beeinflussenden Laständerung, hier einer Stromabsenkung. Die Höhe des während der normal verlaufenden Kondensatorladung verbleibenden Stromes in der Leitung a/b kann bei Anwendung des Last-Übernahmepfades im wesentlichen durch die Ausbildung der den Pfad aussteuernden Qelle bestimmt werden.

Diese an einen starren Potentialabgriff gebundene Anordnung lässt sich für über den Verstärkereingang angesteuerte Strompfade verbessern, wenn zwischen Fühlpunkt und Strompfad eine Transistorstufe eingefügt wird und als Steuerpotential das über einen Kollektorwiderstand von einem hohen Anfangswert auf einen niedrigen Endwert zulaufende Kollektorpotential dient. Besonders vorteilhaft wird eine solche Anordnung, wenn, wie in Fig. 3 gezeigt, dabei eine Vereinigung dieser den Transistor T3 und den Kollektorwiderstand R6 enthaltenden Anordnung mit dem das Verstärker-Arbeitspotential bereitstellenden Spannungsteiler R1/R2 stattfindet und die Dimensionierung so erfolgt, dass der Transistor T3 bereits vor Erreichen der normalen Arbeitspunktlage durchschaltet.

Soll der von hohem Anfangspotential auf ein tieferliegendes Endpotential zulaufende Vorgang über eine am Verstärkerausgang vorgenommene Abfühlung erhalten werden, dann kann dieses über eine von der Endstufe angesteuerte oder mit der Endstufe mitlaufende besondere Regelstufe erfolgen. Fig. 4 zeigt eine sparsam gehaltene Möglichkeit für die Gestaltung einer solchen Regelstufe. Hier wird als Endstufe oder auch einzige Stufe ein Doppel-Kollektor-Transistor T11 verwendet und das Steuerpotential SP über den am Kollektorwiderstand R8 herrschenden Spannungsabfall zur Verfügung gestellt.

Abschliessend ist noch zu erwähnen, dass die sich auf die Aussteuerung jeweils eines einzigen Überbrückungs-Strompfades beschränkenden Beispiele selbstverständlich auch auf die kombinierte Aussteuerung beider korrigierenden Strompfadarten ausdehnen lassen.

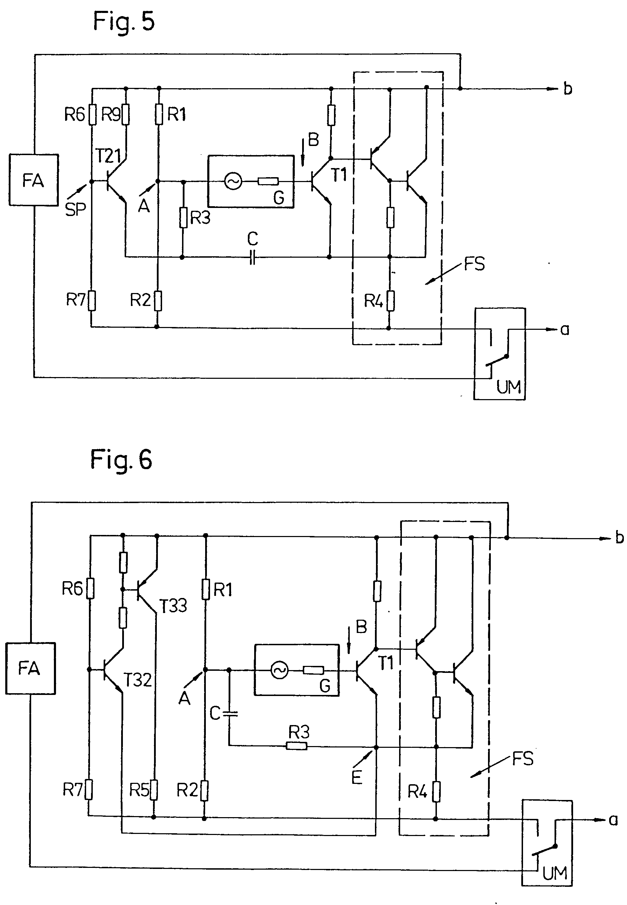

Die Fig. 5 zeigt ein Beispiel für eine Modifikation der mit dem Strompfad T21 arbeitenden Anordnung nach Fig. 1. Bei der Anordnung der Fig. 5 ist der Gegenkopplungswiderstand R4 in den Einkopplungsteil FS aufgenommen. Der Widerstand R4 bewirkt in Verbindung mit den Widerständen R1 und R2 im eingeschwungenen Zustand für die Gesamtschaltung einen differentiellen Widerstand $R_o = (1+R1/R2) \cdot R4$. Im Moment des Einschaltens ist der differentielle Widerstand der Ladeschaltung nach Fig. 1:

$R_{oein} = (1+R6/R7) (R4+R3)$.

Im Gegensatz zur Fig. 1 ist bei der Anordnung der Fig. 5 der Emitter des Transistors T21 am Verbindungspunkt von R3 und C angeschlossen. Ausserdem sind die beiden Schaltungskomponenten R3 und C miteinander vertauscht, so dass R3 mit seinem freien Ende am Punkt A und der Kondensator C mit seinem freien Ende am Emitter von T1 angeschlossen ist. Bei der Schaltung nach Fig. 5 ist ebenso wie bei der Schaltung nach Fig. 1 im eingeschwungenen Zustand der differentielle Widerstand $R_o = (1+R1/R2) R4$.

Im Moment des Einschaltens wird jedoch bei der Schaltung nach Fig. 5 der Kondensator C direkt aufgeladen. Dies hat zur Folge, dass bei der Schaltungsanordnung nach Fig. 5 der differentielle Widerstand der Ladeschaltung im Einschaltmoment nur noch $R_{oein} = (1 + R6/R7) \cdot R4$ beträgt und dadurch gegenüber dem differentiellen Widerstand bei der Schaltungsanordnung der Fig. 1 stark reduziert ist. Dies ist gleichbedeutend mit einer erheblichen Verkürzung der Ladezeit.

Ein in die Kollektorleitung des Transistors T21 eingefügter Kollektorwiderstand R9 entsprechender Grösse beeinflusst die Ladezeit nicht, begrenzt jedoch bei Blitzüberschlägen und beim Stosstest den Ladestrom auf eine für die Schaltung ungefährliche Grösse.

Ein weiteres erfindungsgemässes Beispiel zeigt die Fig. 6. Bei der Schaltung der Fig. 6 übernehmen die Transistoren T32 und T33 die Aufgabe des Transistors T22 der Fig. 1. Die Steuerung der Ladeschaltung erfolgt durch den Anschluss des Emitters von T32 am Punkt E. Wenn die Aktivierung des Verstärkers so weit fortgeschritten ist, dass durch R4 ein Strom fliesst, wird das Emitterpotential von T32 in die Nähe des durch R6 und R7 bestimmten Potentials an der Basis dieses Transistors gebracht, wodurch der Transistor T32 stromlos wird und den zuvor über T33 und R5 gebildeten Belastungsstrompfad abschaltet.

### Patentansprüche

1. Schaltungsanordnung für das Verstärker-Netzwerk einer Fernmeldeapparatur zur Verhinderung der fälschlichen Signalisierung einer Änderung des peripheren Schaltzustandes eines Fernmeldeanschlusses durch den beim Schaltwechsel von anderen Funktionsmitteln auf das Verstärker-Netzwerk auftretenden Einpegelungsvorgang, der durch die Arbeitspunkteinstellung des einen kapazitiv abriegelnden Eingangs-Stromkreis aufweisenden und über die Anschlussleitung (a, b) mit Betriebspotential versorgten Verstärkers hervorgerufen wird, insbesondere der fälschlichen Rücknahme einer für den Fernmeldeanschluss mittels anderer Funktionsmittel (FA) herbeigeführten Belegungskennung, dadurch gekennzeichnet, dass ein wesentlicher Teil des relativ hohe Widerstandswerte aufweisenden Verstärker-Netzwerkes (R1, R2, T1..) durch mindestes einen vorübergehend aktiviert gehaltenen Strompfad (T21, T22) überbrückt wird.

2. Schaltungsanordnung nach Anspruch 1, dadurch gekennzeichnet, dass der Grad der Aktivierung des Überbrückungs-Strompfades (T21, T22) von der zwischen den Anschlusspunkten (M/O) des Verstärker-Netzwerkes herrschenden Potentialdifferenz abhängig gehalten ist.

3. Schaltungsanordnung nach Anspruch 1, dadurch gekennzeichnet, dass der Grad der Aktivierung des Überbrückungs-Strompfades (T21, T22) von der Potentiallage des Arbeitspunktes des Verstärkers (T1) abhängig gehalten ist.

4. Schaltungsanordnung nach einem der Ansprüche 1 bis 3, dadurch gekennzeichnet, dass der vorübergehend aktiviert gehaltene Überbrückungs-Strompfad (T21) einen zusätzlichen Ladestromzweig für den Abriegelungskondensator (C) des Eingangsstromkreises des Verstärkers (T1) bildet.

5. Schaltungsanordnung nach einem der Ansprüche 1 bis 3, dadurch gekennzeichnet, dass der vorübergehend aktiviert gehaltene Überbrückungs-Strompfad (T22) eine Zusatzlast (R5,..) für die Fernmeldeanschlussleitung (a/b) bildet.

6. Schaltungsanordnung nach Anspruch 3, dadurch gekennzeichnet, dass das den Grad der Aktivierung des Überbrückungs-Strompfades (T21, T22) bestimmende Abfühlen der Potentiallage des Arbeitspunktes des Verstärkers (T1) an
der Eingangsseite (A/B) des Verstärkers erfolgt.

7. Schaltungsanordnung nach Anspruch 3,
dadurch gekennzeichnet, dass das den Grad
der Aktivierung des Überbrückungs-Strompfades
(T21, T22) bestimmende Abfühlen der Potentiallage des Arbeitspunkte des Verstärkers (T1) an
der Ausgangsseite (T11/R8) des Verstärkers
erfolgt.

8. Schaltungsanordnung nach den Ansprüchen
2, 6 oder 7, dadurch gekennzeichnet, dass mit
der Steuerstrecke des Überbrückungs-Strompfades (T21, T22) eine das Aktivierungsende bestimmende Schwelle (Basis-Emitter-Strecke,
Zusatzdiode, ..) geboten wird.

9. Schaltungsanordnung nach einem der Ansprüche 1 bis 8, dadurch gekennzeichnet, dass
die Steuergrösse (SP) für den Überbrückungs-
Strompfad (T21, T22) einem festen Teilpotential
(Fig. 2, R6/R7) der Leitungsspannung entnommen
wird.

10. Schaltungsanordnung nach einem der Ansprüche 1 bis 8, dadurch gekennzeichnet, dass
die Steuergrösse (SP) für den Überbrückungs-
Strompfad (T21, T22) durch eine Regelstufe
(Fig. 3, T3/R6) von einem anfänglich höheren
Wert zu einem danach bis unterhalb oder in
Höhe des Ruhepotential des Verstärker-Netzwerkes (T1, ..) liegenden Wert verändert wird.

11. Schaltungsanordnung nach Anspruch 10,
dadurch gekennzeichnet, dass zur Aussteuerung
der Regelstufe (Fig. 3, T3/R6) für die Steuergrösse (SP) die das stabile Arbeitspotential des
Verstärker-Netzwerkes (T1,..) bereitstellenden
Schaltungselemente (R1, R2) mit verwendet
werden.

12. Schaltungsanordnung nach den Ansprüchen 5 oder 6, dadurch gekennzeichnet, dass
zum Abfühlen der Eingangspotentiallage die
zwischen dem Emitter des Eingangstransistors
(T1) und einem festen Teilerpotential (R6/R7) der
Leitungsspannung vorhandene Potentialdifferenz
herangezogen wird.

**Revendications**

1. Montage pour le circuit d'amplification d'un
appareillage de télécommunications destiné à
empêcher la signalisation erronée d'un changement de l'état commuté périphérique d'une télécommunication par le nivelage apparaissant sur
le circuit d'amplification lors d'un changement
de commutation des autres organes fonctionnels,
nivelage qui est provoqué par le réglage du point
de fonctionnement dynamique de l'amplificateur
comprenant un circuit électrique d'entrée à verrouillage capacitif et qui est alimenté en potentiel de fonctionnement par l'intermédiaire de la
ligne de raccordement (a, b), notamment la reprise erronée d'un code d'occupation pour la
liaison amenée au moyen d'autres organes fonctionnels (FA), caractérisé en ce qu'une partie importante du circuit d'amplification (R1, R2,
T1 ..) avant des valeurs de résistance relativement élevées est pontée par au moins un circuit
(T21, T22) maintenue temporairement à l'état
actif.

2. Montage selon la revendication 1, caractérisé en ce que le degré d'activation du circuit de
dérivation (T21, T22) est maintenu en fonction de
la différence de potentiel existant entre les
points de connexion (M/O) du circuit d'amplification.

3. Montage selon la revendication 1, caractérisé en ce que le degré d'activation du circuit de
dérivation (T21, T22) est maintenu en fonction de
l'état du potentiel du point de fonctionnement
dynamique de l'amplificateur (T1).

4. Montage selon l'une des revendications 1 à
3, caractérisé en ce que le circuit de dérivation
(T21) maintenu temporairement à l'état actif forme un circuit de charge auxiliaire pour le condensateur de verrouillage (C) du circuit d'entrée
de l'amplificateur (T1).

5. Montage selon l'une des revendications 1 à
3, caractérisé en ce que le circuit de dérivation
(T22) maintenu temporairement à l'état actif forme une charge additionnelle (R5...) pour la ligne de télécommunication (a/b).

6. Montage selon la revendication 3, caractérisé en ce que la détection de l'état du potentiel
du point de fonctionnement dynamique de l'amplification (T1) déterminant le degré d'activation
du circuit de dérivation (T21, T22) est effectuée
côté entrée (A/B) de l'amplificateur.

7. Montage selon la revendication 3, caractérisé en ce que la détection de l'état du potentiel
du point de fonctionnement dynamique de l'amplificateur (T1) déterminant le degré d'activation
du circuit de dérivation (T21, T22) est effectuée
côté sortie (T11, R8) de l'amplificateur.

8. Montage selon les revendications 2, 6 ou 7,
caractérisé en ce que le seuil déterminant la fin
de l'état actif (circuit émetteur de base, diode
auxiliaire ...) est réalisé par le circuit de pilotage du circuit de dérivation (T21, T22).

9. Montage selon l'une des revendications 1 à
8, caractérisé en ce que la grandeur de commande (SP) pour le circuit de dérivation (T21,
T22) est prélevée d'un potentiel partiel fixe (fig. 2
R6/R7) de la tension de ligne.

10. Montage selon l'une quelconque des revendications 1 à 8, caractérisé en ce que la grandeur de commande (SP) pour le circuit de dérivation (T21, T22) est transformée au moyen d'un
étage de régulation (fig. 3 T3/R6) à partir d'une
valeur initialement élevée en une valeur inférieure ou égale au potentiel de repos du circuit
d'amplification (T1....).

11. Montage selon la revendication 10, caractérisé en ce que les éléments (R1, R2) fournissant le potentiel de travail stable du circuit d'amplification (T1...) sont également utilisés pour
la modulation maximale de l'étage de régulation
(fig. 3 T3/R6) pour la grandeur de commande
(SP).

12. Montage selon les revendications 5 ou 6, caractérisé en ce que la différence de potentiel existant entre l'émetteur du transistor d'entrée (T1) et un potentiel partiel fixe (R6/R7) de la tension de ligne est utilisée pour détecter l'état du potentiel d'entrée.

## Claims

1. Circuit arrangement for the amplifier network of a communication apparatus for the prevention of false signalling of a change of the peripheral switching condition of functional means of a communication connection, which causes a leveling process in the amplifier network, whereby said leveling process is caused by the quiescent point adjustment of an input circuit with capacitive blocking of an amplifier being supplied via the terminal line (a/b), particulary of the false withdrawal of a busy signal caused by other means (FA), characterized in, that an essential part of the amplifier network (R1, R2, T1 ...) having a high resistance is bridged by a current path (T21, T22), which can be at least temporarily activated.

2. Circuit arrangement as set forth in claim 1, characterized in that the degree of activation of the bridging current path (T21, T22) depends on the potential difference between the terminals (M/o) of the amplifier network.

3. Circuit arrangement as set forth in claim 1, characterized in that the degree of activation of the bridging current path (T21, T22) depends on the potential position of the quiescent point of the amplifier (T1).

4. Circuit arrangement as set forth in one of claims 1 to 3, characterized in that the temporarily activated bridging current path (T21) forms an additional load current branch for the blocking capacitor (C) of the input circuit of the amplifier (T1).

5. Circuit arrangement as set forth in one of claims 1 to 3, characterized in that the temporarily activated bridging current path (T22) forms an additional load (R5, ...) for the terminal line (a/b).

6. Circuit arrangement as set forth in claim 3, characterized in that the determination of the potential position of the quiescent point of the amplifier (T1), which specifies the degree of activation of the bridging current path (T21, T22), is performed at the input side (A/B) of the amplifier.

7. Circuit arrangement as set forth in claim 3, characterized in that the determination of the potential position of the quiescent point of the amplifier (T1), which specifies the degree of activation of the bridging current path (T21, T22), is performed at the output side (T11/28) of the amplifier.

8. Circuit arrangement as set forth in claims 2, 6 or 7 characterized in that a threshold (base-emitter path, additional diode, ...) for the determination of the end of activation is formed by the control path of the bridging current path (T21, T22).

9. Circuit arrangement as set forth in one of claims 1 to 8, characterized in, that the control volume (SP) for the bridging current path (T21, T22) is derived from a fixed component voltage (Fig. 2, R6/R7) of the line voltage.

10. Circuit arrangement as set forth in one of claims 1 to 8, characterized in that the control volume (SP) for the bridging current path (T21, T22) is varied by a regulation step (Fig. 3, T3/R6) from an initial higher value to a later value below or corresponding with the equilibrium rest potential of the amplifier network.

11. Circuit arrangement as set forth in claim 10, characterized in, that the switching elements (R1, R2) forming the stable working potential of the amplifier network (T1, ...) are used for the control of the regulation step (Fig. 3, T3/R6) for the control volume (SP).

12. Circuit arrangement as set forth in claims 5 or 6, characterized in that the potential difference between the emitter of the input transistor (T1) and a fixed divider potential (R6/R7) of the line voltage is used for the determination of the input potential position.

Fig. 1

Fig. 2    Fig. 3    Fig. 4

## Fig. 5

## Fig. 6